(19) Europäisches Patentamt
European Patent Office
Office européen des brevets

(11) **EP 3 060 534 B1**

(12) **FASCICULE DE BREVET EUROPEEN**

(45) Date de publication et mention
de la délivrance du brevet:
**23.06.2021 Bulletin 2021/25**

(51) Int Cl.:
***C04B 40/04*** (2006.01)

(21) Numéro de dépôt: **14793471.5**

(22) Date de dépôt: **21.10.2014**

(86) Numéro de dépôt international:
**PCT/EP2014/072547**

(87) Numéro de publication internationale:
**WO 2015/059141 (30.04.2015 Gazette 2015/17)**

(54) **UTILISATION D'UNE ET PROCÉDÉ COMPRENANT LA PULVERISATION D'UNE COMPOSITION DE CURE POUR COMPOSITION HYDRAULIQUE ASSURANT UNE ADHÉRENCE AMÉLIORÉE**

**VERWENDUNG EINER UND VERFAHREN UMFASSEND DAS AUFSPRÜHEN EINER HÄRTUNGSZUSAMMENSETZUNG FÜR EINE HYDRAULISCHE ZUSAMMENSETZUNG AUFWEISEND VERBESSERTE HAFTUNG**

**USE OF AND METHOD COMPRISING THE SPRAYING OF A CURING COMPOSITION FOR A HYDRAULIC COMPOSITION PROVIDING IMPROVED ADHESION**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.10.2013 FR 1360243**

(43) Date de publication de la demande:
**31.08.2016 Bulletin 2016/35**

(73) Titulaire: **Chryso**
**92440 Issy-Les-Moulineaux (FR)**

(72) Inventeurs:
• **BASUYAUX, Laura**
**45170 Neuville Aux Bois (FR)**
• **MATEO, Sandrine**
**77760 Ury (FR)**

(74) Mandataire: **Lavoix**
**62, rue de Bonnel**
**69448 Lyon Cedex 03 (FR)**

(56) Documents cités:
EP-A1- 0 089 260      WO-A1-03/101910
WO-A1-2011/005480      WO-A2-03/084897
DE-B- 1 043 552      DE-C1- 19 735 431
US-A- 4 439 563

• **None**

**Description**

Utilisée selon l'invention est une composition aqueuse de traitement de surface de compositions hydrauliques permettant de limiter le risque de fissuration et d'assurer la rétention d'eau nécessaire à la prise desdites compositions hydrauliques tout en apportant des propriétés d'adhérence à la surface desdites compositions hydrauliques après prise.

Les compositions hydrauliques sont des compositions comprenant un liant hydraulique, c'est-à-dire un composé ayant la propriété de s'hydrater en présence d'eau et dont l'hydratation (phénomène appelé prise) permet d'obtenir un solide ayant des caractéristiques de résistances mécaniques. Les compositions hydrauliques sont par exemple des compositions de béton, chape ou mortier.

Un des défauts rédhibitoires lors de la prise de compositions hydrauliques est l'apparition de fissures liées au retrait du mortier ou béton contenant le liant hydraulique, ce retrait étant très fréquemment la conséquence d'une perte d'eau par évaporation.

Il est par conséquent connu de recouvrir la surface de la composition hydraulique fraîche avec des compositions de cure (notamment FR2691962, US4495319, US2928752) qui permettent d'assurer la rétention d'eau nécessaire à sa prise et de limiter/éviter l'apparition de fissures.

De manière générale, les compositions de cure, déposées à la surface d'une composition hydraulique fraîche, permettent de la protéger notamment contre les pertes d'humidité. Après prise de la composition hydraulique et séchage du produit de cure, ce dernier doit être éliminé par ponçage. En effet, un opérateur collant directement sur la surface de la composition hydraulique durcie, obtenue après séchage du produit de cure, des matériaux de finition de type carrelage, moquette, etc, prend le risque avec les solutions traditionnelles de manquer d'adhérence. Une étape préalable de ponçage de la surface de la composition durcie obtenue est alors nécessaire pour assurer l'adhérence des matériaux de finition. Cette étape préalable est à l'origine d'une augmentation du temps nécessaire à la pose des matériaux de finition et par conséquent d'une perte de productivité et une augmentation des coûts de production. De plus, cette étape de ponçage est à l'origine de la production de déchets qu'il sera nécessaire de mettre en décharge et de poussières potentiellement dangereuses pour l'opérateur (risque d'inhalation).

Il a été proposé, WO03/101910, une composition synergique comprenant au moins une paraffine seule ou associée à au moins un autre composé hydrocarboné, au moins un latex formé d'une émulsion aqueuse colloïdale d'au moins un polymère et au moins une charge pulvérulente d'origine minérale ou organique. Cependant, cette composition peut difficilement être utilisée par pulvérisation, les charges pulvérulentes bouchant les buses. Or il est nécessaire pour un produit de cure de pouvoir le déposer sur la surface de la composition hydraulique fraîche par pulvérisation puisque toute autre méthode de dépôt (par exemple par pinceau, rouleau...) modifierait la surface de la composition hydraulique ce qui n'est pas souhaitable.

Il y a donc un intérêt à fournir une composition de cure de composition hydraulique permettant également d'apporter des propriétés d'adhérence à la surface de la composition hydraulique durcie qui puisse être utilisée par pulvérisation.

Un objectif est de fournir une composition de cure de composition hydraulique permettant de limiter le risque de fissuration et également d'apporter des propriétés d'adhérence à la surface de la composition hydraulique durcie et qui puisse notamment être mise en œuvre par pulvérisation.

Un autre objectif est de fournir une telle composition qui permette d'obtenir un coefficient de protection vis-à-vis de la cure supérieur ou égal à 70%, de préférence supérieur ou égal à 80%, de préférence supérieur ou égal à 90% à 6h.

Un autre objectif est de fournir une telle composition qui permette d'obtenir un coefficient de protection vis-à-vis de la cure supérieur ou égal à 45%, de préférence supérieur ou égal à 60% à 24h.

Un autre objectif est également de fournir une telle composition qui permette d'obtenir une adhérence supérieure ou égale à 0,6 MPa, de préférence supérieure ou égale à 0,7 MPa.

D'autres objectifs encore apparaîtront à la lecture de la description qui suit.

La présente invention concerne l'utilisation d'une composition comprenant au moins une émulsion de cire paraffinique et au moins un latex formé d'une émulsion aqueuse colloïdale d'au moins un polymère et/ou copolymère, la composition étant exempte d'huile paraffinique et exempte de charges, la composition étant pulvérisée sur une composition hydraulique fraîche, pour assurer la cure de ladite composition hydraulique fraîchement mise en place ou fraîchement démoulée et apporter conjointement des propriétés adhérentes à la surface de ladite composition hydraulique durcie.

Il est également décrit l'utilisation d'une composition comprenant un système actif constitué d'au moins une émulsion de cire paraffinique et au moins un latex formé d'une émulsion aqueuse colloïdale d'au moins un polymère et/ou copolymère, pour assurer la cure d'une composition hydraulique fraîchement mise en place ou fraîchement démoulée et apporter conjointement des propriétés adhérentes à la surface de ladite composition hydraulique durcie.

On entend par système actif constitué d'au moins une émulsion de cire paraffinique et au moins un latex formé d'une émulsion aqueuse colloïdale d'au moins un polymère et/ou copolymère, un système actif constitué d'une ou plusieurs émulsion(s) de cire(s) paraffinique(s) et d'un ou plusieurs latex formé(s) d'une ou plusieurs émulsion(s) aqueuse(s) colloïdale(s) d'un ou plusieurs polymère(s) et/ou copolymère(s).

On entend par système actif le système permettant d'assurer la cure de la composition hydraulique fraîchement mise en place ou fraîchement démoulée et apporter conjointement des propriétés adhérentes à la surface de ladite composition hydraulique durcie.

Un autre objet de la présente invention concerne un procédé permettant d'assurer la cure d'une composition hydraulique fraîchement mise en place ou fraîchement démoulée et d'apporter conjointement des propriétés adhérentes à la surface de ladite composition hydraulique durcie comprenant la pulvérisation sur la composition hydraulique fraîche d'une composition selon l'invention comprenant au moins une émulsion de cire paraffinique et au moins un latex formé d'une émulsion aqueuse colloïdale d'au moins un polymère et/ou copolymère, la composition étant exempte d'huile paraffinique et exempte de charges.

La composition utilisée selon l'invention est une émulsion aqueuse ou mélange de compositions aqueuses, notamment une émulsion aqueuse comprenant une émulsion de cire paraffinique et au moins un latex formé d'une émulsion aqueuse colloïdale d'au moins un polymère et/ou copolymère.

De préférence ladite composition est destinée à être appliquée sur la surface d'une composition hydraulique fraîchement mise en place ou fraîchement démoulée pour assurer la rétention d'eau nécessaire à la prise de ladite composition hydraulique pour limiter le risque de fissuration tout en apportant des propriétés d'adhérence à la surface de ladite composition hydraulique après prise (composition hydraulique durcie).

Dans le cadre de la présente invention on entend par composition hydraulique une composition comprenant un liant hydraulique. Par exemple, on entend par composition hydraulique une composition comprenant un liant hydraulique, éventuellement un granulat, une addition minérale, de l'eau, un adjuvant (tel qu'un superplastifiant, un additif anti-mousse, un additif entraîneur d'air, un hydrofuge, un plastifiant ou un fluidifiant).

Dans le cadre de la présente invention, les compositions hydrauliques sont par exemple les compositions de béton, mortier ou chape.

On entend par le terme « fraiche » qualifier de telles compositions à base de liant hydraulique lorsqu'elles ont été gâchées avec de l'eau, mais n'ont pas encore durci.

Par le terme « prise » on entend le passage à l'état solide par réaction d'hydratation du liant.

Dans le cadre de la présente invention, on entend par « composition hydraulique durcie » la composition résultante de la prise de la composition hydraulique dû à l'hydratation du liant hydraulique présent dans la composition hydraulique.

Par « granulats », on entend un ensemble de grains minéraux de diamètre moyen compris entre 0 et 125 mm. Selon leur diamètre, les granulats sont classés dans l'une des six familles suivantes: fillers, sablons, sables, graves, gravillons et ballast (norme XP P 18-545). Les granulats les plus utilisés sont les suivants:

- les fillers, qui ont un diamètre inférieur à 2 mm et pour lesquels au moins 85 % des granulats ont un diamètre inférieur à 1,25 mm et au moins 70 % des granulats ont un diamètre inférieur à 0,063 mm,
- les sables de diamètre compris entre 0 et 4 mm (dans la norme 13-242, le diamètre pouvant aller jusqu'à 6 mm),
- les graves de diamètre supérieur à 6,3 mm,
- les gravillons de diamètre compris entre 2 mm et 63 mm.

Les sables sont donc compris dans la définition de granulat selon l'invention.

Les fillers peuvent notamment être d'origine calcaire ou dolomitique.

On entend par le terme « liant hydraulique » tout composé ayant la propriété de s'hydrater en présence d'eau et dont l'hydratation permet d'obtenir un solide ayant des caractéristiques mécaniques, notamment un ciment tel qu'un ciment Portland, ciment alumineux, ciment pouzzolanique ou encore un sulfate de calcium anhydre ou semi-hydraté. Le liant hydraulique peut être un ciment selon la norme EN197-1 (2001) et notamment un ciment Portland, des additions minérales, notamment laitiers, ou un ciment comprenant des additions minérales.

On entend par «ciment» un ciment selon la norme EN 197-1 (2001) et notamment un ciment de type CEM I, CEM II, CEM III, CEM IV ou CEM V selon la norme Ciment NF EN 197-1 (2012). Le ciment peut comprendre des additions minérales.

L'expression « additions minérales » désigne les laitiers (tels que définis dans la norme Ciment NF EN 197-1(2012) paragraphe 5.2.2), les laitiers d'aciérie, les matériaux pouzzolaniques (tels que définis dans la norme Ciment NF EN 197-1(2012) paragraphe 5.2.3), les cendres volantes (telles que définies dans la norme Ciment NF EN 197-1(2012) paragraphe 5.2.4), les schistes calcinés (tels que définis dans la norme Ciment NF EN 197-1 (2012) paragraphe 5.2.5), les calcaires (tels que définis dans la norme Ciment NF EN 197-1(2012) paragraphe 5.2.6) ou encore les fumées de silices (telles que définies dans la norme Ciment NF EN 197-1(2012) paragraphe 5.2.7) ou leurs mélanges. D'autres ajouts, non actuellement reconnus par la norme Ciment NF EN 197-1(2012), peuvent aussi être utilisés. Il s'agit notamment des métakaolins, tels que les métakaolins de type A conformes à la norme NF P 18-513 (août 2012), et des additions siliceuses, telles que les additions siliceuses de minéralogie Qz conformes à la norme NF P 18-509 (septembre 2012).

Ainsi et de préférence, les compositions de liant hydraulique selon l'invention peuvent être des compositions de béton, mortier, chape, notamment chape ciment et chape anhydrite.

De préférence, la cire paraffinique sera sous forme d'émulsion aqueuse, stabilisée par un ou plusieurs système(s) tensio-actif(s) non ionique(s), cationique(s), anionique(s), non ionique(s) et anionique(s) ou non ionique(s) et cationique(s). De préférence la cire paraffinique sera sous forme d'émulsion stabilisée par un ou plusieurs système(s) tensio-actif(s) non ionique(s).

De préférence, la cire paraffinique comprend une paraffine d'origine pétrolière ou de synthèse renfermant, en mélange, des hydrocarbures linéaires ou ramifiés, saturés et/ou insaturés aliphatiques (alcanes et/ou alcènes) de formules générales $C_nH_{2n+2}$ et $C_nH_{2n}$, pour lesquels n est un entier supérieur ou égal à 15, de préférence supérieur ou égal à 20, de préférence entre 20 et 120 et dont le point de fusion est compris entre 40 et 75°C, de préférence entre 50 et 70°C. La densité de la paraffine est alors de préférence comprise entre 0,85 et 0,95, par exemple entre 0,88 et 0,93.

De préférence, un agent émulsifiant, permettant d'éviter la coalescence de l'émulsion et de stabiliser ladite émulsion, peut être introduit. Un tel agent peut être anionique ou non-ionique, de préférence non-ionique. L'émulsifiant est notamment choisi parmi les acides gras en C8 à C22 neutralisés par une amine (par exemple triéthanolamine), des composés sulfonés, des composés sulfatés, des composés phosphonés, des composés phosphatés, des alcools gras, des esters de sorbitan, des copolymères oxyde d'éthylène-oxyde de propylène, ou autres.

Parmi les émulsions de paraffine, il est possible de citer les émulsions commercialisées par Sasol sous le nom de HydroWax® ou SasolWax®, par Exxon-Mobil Oil sous les noms Mobilcer®, Prowax®, Mobilwax®, Repsol sous le nom de Redemul® ou Michelman sous le nom ME91240E®.

De préférence, dans la composition utilisée selon l'invention, le latex est constitué d'une émulsion aqueuse colloïdale d'au moins un polymère et/ou copolymère choisi dans le groupe constitué par les homopolymères d'acide (méth)acrylique, et des esters de ces acides dont le groupement esters est en C1 à C12, tels que méthyle, éthyle, propyle, butyle, pentyle, hexyle, octyle, 2-éthyle-hexyle, 2-éthyle-butyle, 2-heptyle-hexyle, par les copolymères d'acide (méth)acrylique et/ou des esters de ces acides dont le groupement esters est en C1 à C12, les copolymères de vinyle et d'acide (méth)acrylique, les copolymères de vinyle et d'esters en C1 à C12, les copolymères d'acide (méth)acrylique, les copolymères d'acide (méth)acrylique et d'esters (méth)acryliques, des copolymères de styrène-(méth)acrylique, les copolymères d'éthylène et d'acétate de vinyle, les copolymères d'éthylène et d'acide (méth)acrylique, les copolymères acryliques/uréthane, les copolymères styrène-butadiène.

Dans le cadre de la présente invention on entend par acide (méth)acrylique ou (méth)acrylate désigner les acides acryliques et méthacryliques et les acrylates ou méthacrylates.

De préférence, le latex selon l'invention présente une TMFF comprise entre 0 et 30°C. Dans le cadre de la présente invention, on entend par TMFF la Température Minimale de Formation d'un Film. Cela correspond à la température minimale à laquelle un film de latex déposé devient continu et transparent. En dessous de ce point le latex sec est opaque et craquelé, voire poudreux. Cette température peut être mesurée par toute méthode connue de l'homme du métier et notamment à l'aide d'un banc métallique auquel on applique un gradient de température et sur lequel on dépose une suspension de latex selon la ISO 2115 (1996).

De préférence, le latex comprend de 10 à 80% en poids du polymère ou copolymère.

De préférence, le latex selon l'invention est formé d'une émulsion aqueuse colloïdale d'un copolymère styrène-butadiène ou d'un polymère acrylique.

De préférence, le latex selon l'invention est formé d'une émulsion aqueuse colloïdale d'un copolymère styrène-butadiène.

De façon particulièrement avantageuse, les inventeurs ont montré que le choix particulier du latex styrène-butadiène, en comparaison aux autres latex, par exemple aux latex acryliques, permet d'obtenir un meilleur compromis entre cure et adhérence et permet notamment l'obtention des propriétés suivantes :

- un coefficient de protection vis-à-vis de la cure supérieur ou égal à 70%, de préférence supérieur ou égal à 80%, de préférence supérieur ou égale à 90% à 6h ; et/ou
- un coefficient de protection vis-à-vis de la cure supérieur ou égal à 45%, de préférence supérieur ou égal à 60% à 24h ; et/ou
- une adhérence supérieure ou égale à 0,6 MPa, de préférence supérieure ou égale à 0,7 MPa.

Le coefficient de protection de cure est déterminé par dérogation de la norme NF P18-371 (2013) selon la norme européenne NF 085-EN 934-2 (2009) sur la base d'une composition de chape autonivelante, comme précisé dans les exemples.

De façon préférée, la composition utilisée selon l'invention comprend de 50 à 90%, de préférence de 60 à 80% en poids du latex et 10 à 50%, de préférence de 20 à 40% en poids de l'émulsion de cire paraffinique.

La composition utilisée selon l'invention peut en outre comprendre des additifs connus de l'homme du métier dans le domaine considéré, et notamment des additifs antigel, des colorants (cela permettant notamment à l'utilisateur de visualiser les parties de la surface qui ont déjà été traitées), des biocides, des agents de coalescence, des modificateurs de viscosité, etc.

De préférence, la composition utilisée selon l'invention est constituée d'au moins une émulsion de cire paraffinique et d'au moins un latex formé d'une émulsion aqueuse colloïdale d'au moins un polymère et/ou copolymère et éventuellement d'additifs, notamment choisis parmi des additifs antigel, des colorants (cela permettant notamment à l'utilisateur de visualiser les parties de la surface qui ont déjà été traitées), des biocides, des agents de coalescence et/ou des modificateurs de viscosité.

La composition utilisée selon l'invention est utilisée par pulvérisation sur la surface d'une composition hydraulique fraîche. La charge utile déposée par unité de surface (quantité déposée par unité de surface) de composition hydraulique définie comme dosage est notamment de 50 à 300 g/m$^2$, notamment entre 100 et 250 g/m$^2$.

Il est également décrit un procédé de préparation de la composition précitée comprenant le mélange du latex et de l'émulsion de cire paraffinique. De préférence, le mélange est réalisé par agitation à température ambiante.

Les éventuels additifs sont ajoutés après mélange du latex et de l'émulsion de cire paraffinique.

La présente invention va maintenant être décrite à l'aide d'exemples non limitatifs. Exemples :

## Préparation des compositions

Dans un réacteur, on mélange la quantité désirée de latex et d'émulsion de cire paraffinique sous agitation douce et à température ambiante. L'antigel le cas échéant est ensuite ajouté sous légère agitation. Pour obtenir un mélange homogène exempt de particules de cire, l'émulsion aqueuse est filtrée via un filtre à poches présentant des mailles de 400 $\mu$m de diamètre.

Les spécifications de l'émulsion de cire paraffinique sont : pH=9, extrait sec = 45%, une viscosité Brookfiled = 150 cPo, une densité de 0.930 et un système de tensio-actif de type non-ionique

Les spécifications du latex styrène-butadiène utilisé dans ces exemples sont un extrait sec de 50%, un pH de 8, une TMFF de 0°C, une viscosité de 100 mPas.s et un diamètre de particules de 0.2$\mu$m.

Les spécifications du latex acrylique utilisé dans ces exemples sont un extrait sec de 50%, un pH de 8.8 et une TMFF de 18°C.

Les compositions obtenues contiennent en moyenne 47% en poids d'extrait sec.

Le tableau 1 ci-dessous regroupe les compositions préparées et testées :

Tableau 1

| Composition | Emulsion de cire paraffinique n supérieur à 20 30 (% en poids) | Latexstyrène-butadiène (% en poids) | Latex acrylique (% en poids) | Antigel (% en poids) |
|---|---|---|---|---|
| 1 | 100 | - | - | - |
| 2 | - | 100 | - | - |
| 3 | 40 | - | 60 | - |
| 4 | 30 | - | 70 | - |
| 5 | 27,4 | 70 | - | 2,6 |
| 6 | 32,4 | 65 | - | 2,6 |
| 7 | 47,4 | | 50 | 2,6 |

## Evaluation des performances cure

Les performances cure sont déterminées selon le mode opératoire pour la mesure du coefficient de protection par dérogation à la norme NF P18-371 (2013) selon la norme européenne NF 085-EN 934-2 (2009) sur la base de composition d'une chape autonivelante de composition :

| CEM I 52,5 N | 280 kg |
|---|---|
| Filler Durcal 10 | 380 kg |
| Sable 0/4 | 1280 kg |

(suite)

| | |
|---|---|
| Fluid Chape Sols C (Chryso) | 8 kg |
| Eau | 260 kg |

Les compositions 1 à 7 ci-dessus sont pulvérisées à raison de 80 à 160 g/m$^2$ sur la surface de la chape fraîche.

Les résultats obtenus sont regroupés dans le tableau ci-dessous :

| Composition | Dosage (g/m$^2$) | Coefficient de protection à 6 heures (%) | Coefficient de protection à 24 heures (%) |
|---|---|---|---|
| 1 | 120 | 96 | 90 |
| 2 | 120 | 17,5 | Non mesurable |
| 3 | 120 | 70,7 | 46,3 |
| 4 | 120 | 42,6 | 29,9 |
| 5 | 80 | 89 | 49,1 |
| 5 | 120 | 92,2 | 57,7 |
| 5 | 160 | 93,2 | 63,4 |
| 6 | 80 | 90,8 | 55,6 |
| 6 | 120 | 92,4 | 65,1 |
| 6 | 160 | 93,4 | 68,2 |
| 7 | 80 | 93,2 | 65,9 |
| 7 | 120 | 94 | 77,1 |
| 7 | 160 | 94,1 | 79,4 |

Ces résultats montrent que les compositions ne comprenant pas d'émulsion de cire paraffinique ne permettent pas une cure suffisante des compositions hydrauliques. Ces résultats mettent en évidence que le mélange d'une cire paraffinique et d'un latex selon l'invention, notamment dans les concentrations de la présente invention permet d'avoir un effet cure et d'apporter des propriétés adhérentes.

Les résultats montrent également que les compositions comprenant un latex styrène/butadiène permettent une cure plus importante que les compositions comprenant un latex acrylique.

## Evaluation des performances d'adhérence

Les tests d'adhérence sont réalisés sur la base de la composition hydraulique suivante :

| | |
|---|---|
| CEM I 52,5 N | 280 kg |
| Filler Durcal 10 | 380 kg |
| Sable 0/4 | 1280 kg |
| Fluid Chape Sols C (Chryso) | 8 KG |
| Eau | 260 kg |

Des dalles de 40x40x5 cm sont coulées. Les compositions 1 à 7 sont pulvérisées à raison de 80 à 160 g/m$^2$ sur lesdites dalles avant prise.

Dans le cas de cette détermination, on réalise des essais d'adhérence à 28 jours. Les dalles sont curées à 20°C / 65 % Humidité Relative.

Après 7 jours, des carreaux de grès céramiques de dimensions 50x50 mm sont collés sur la surface des dalles obtenues à l'exemple précédent au moyen d'un mortier colle à carrelage (colle LANKO Prolidal Plus 5024® commercialisée par la société PAREX LANKO). Ce mortier colle est appliqué selon la norme NF EN 1348 (2008) qui consiste à :

- étaler le mortier colle avec un peigne aux dents carrées 5X5X5 mm ;
- déposer une charge de 2 kg pendant 25 à 35 secondes sur chaque carreau en cours de collage, 9 carreaux étant collés par dalle ;
- sécher le mortier colle pendant 21 jours à température ambiante (suivant les conditions de la norme NF EN 1348 (2008)) ;
- coller 9 tés d'arrachage sur les carreaux de céramique au moyen d'une colle époxy (LANKO 723® commercialisée par la société PAREX LANKO) ; et
- arracher un jour après les carreaux par l'intermédiaire des tés en mesurant la force nécessaire à l'aide d'un dynamomètre type Dynatest.

L'adhérence par traction (As) est alors déterminée par la formule suivante :

$$A_s = L \, / \, A$$

Où:

As : valeur de l'adhérence par traction exprimée en $N/mm^2$
L est la force totale, exprimée en Newtons ;
A est la surface de collage, soit 2500 $mm^2$ dans le cas des Tés de 5 cm de côté.

Les résultats sont donnés dans le tableau ci-dessous et correspondent à la moyenne des adhérences déterminées pour les 9 Tés :

| Composition | Dosage ($g/m^2$) | Adhérence (MPa) |
|---|---|---|
| Aucune | - | Sans ponçage : 0,7 à 0,8 |
| | | Avec ponçage : 1,4 à 1,6 |
| 1 | 120 | <0,25 |
| 2 | 120 | 1,05 |
| 3 | 120 | 0,85 |
| 4 | 120 | 1,04 |
| 5 | 80 | 0,8 |
| | 120 | 0,89 |
| | 160 | 0,9 |
| 6 | 80 | 0,82 |
| | 120 | 0,86 |
| | 160 | 0,73 |
| 7 | 80 | Non mesurée |
| | 120 | 0,6 |
| | 160 | Non mesurée |

Le tableau ci-dessus montre qu'une composition hydraulique traitée par une composition de cure ne comprenant pas de latex ne possède pas une adhérence suffisante. Au contraire l'ajout de latex permet d'améliorer cette adhérence. Les résultats mettent en évidence que le mélange d'une émulsion de cire paraffinique et d'un latex selon l'invention, notamment dans les concentrations de la présente invention permet d'avoir un effet d'adhérence et de cure.
La comparaison des résultats de cure et d'adhérence met également en avant que la combinaison d'une émulsion de cire paraffinique conforme à l'invention et d'un latex styrène/butadiène permet d'obtenir le meilleur compromis entre cure et adhérence.

**Revendications**

1. Utilisation d'une composition comprenant au moins une émulsion de cire paraffinique et au moins un latex formé d'une émulsion aqueuse colloïdale d'au moins un polymère et/ou copolymère, la composition étant exempte d'huile paraffinique et exempte de charges, la composition étant pulvérisée sur une composition hydraulique fraîche, pour assurer la cure de ladite composition hydraulique fraîchement mise en place ou fraîchement démoulée et apporter conjointement des propriétés adhérentes à la surface de ladite composition hydraulique durcie.

2. Procédé permettant d'assurer la cure d'une composition hydraulique fraîchement mise en place ou fraîchement démoulée et d'apporter conjointement des propriétés adhérentes à la surface de ladite composition hydraulique durcie comprenant la pulvérisation sur la composition hydraulique fraîche d'une composition comprenant au moins une émulsion de cire paraffinique et au moins un latex formé d'une émulsion aqueuse colloïdale d'au moins un polymère et/ou copolymère, la composition étant exempte d'huile paraffinique et exempte de charges.

3. Utilisation selon la revendication 1 ou procédé selon la revendication 2 pour laquelle la cire paraffinique comprend une paraffine d'origine pétrolière ou de synthèse renfermant, en mélange, des hydrocarbures linéaires ou ramifiés, saturés et/ou insaturés aliphatiques (alcanes et/ou alcènes) de formules générales $C_nH_{2n+2}$ et $C_nH_{2n}$, pour lesquels n est un entier supérieur ou égal à 15, de préférence supérieur ou égal à 20, de préférence entre 20 et 120 et dont le point de fusion est compris entre 40 et 75°C, de préférence entre 50 et 70°C.

4. Utilisation selon la revendication 1 ou 3 ou procédé selon la revendication 2 ou 3, pour laquelle le latex est constitué d'une émulsion aqueuse colloïdale d'au moins un polymère et/ou copolymère choisi dans le groupe constitué par les homopolymères d'acide (méth)acrylique, et des esters de ces acides dont le groupement esters est en C1 à C12, tels que méthyle, éthyle, propyle, butyle, pentyle, hexyle, octyle, 2-éthyle-hexyle, 2-éthyle-butyle, 2-heptyle-hexyle, par les copolymères d'acide (meth)acrylique et/ou des esters de ces acides dont le groupement esters est en C1 à C12, les copolymères de vinyle et d'acide (méth)acrylique, les copolymères de vinyle et d'esters en C1 à C12, les copolymères d'acide (méth)acrylique, les copolymères d'acide (méth)acrylique et d'esters (méth)acryliques, des copolymères de styrène-(méth)acrylique, les copolymères d'éthylène et d'acétate de vinyle, les copolymères d'éthylène et d'acide (méth)acrylique, les copolymères acryliques/uréthane, les copolymères styrène-butadiène.

5. Utilisation selon l'une quelconque des revendications 1 ou 3 ou procédé selon la revendication 2 ou 3, pour laquelle le latex est constitué d'une émulsion aqueuse colloïdale d'un copolymère styrène-butadiène.

6. Utilisation selon l'une des revendications 1 et 3 à 5 ou procédé selon l'une des revendications 2 à 5, pour laquelle le latex comprend de 10 à 80% en poids du polymère ou copolymère.

7. Utilisation selon l'une des revendications 1 et 3 à 6 ou procédé selon l'une des revendications 2 à 6, pour laquelle la composition comprend de 50 à 90%, de préférence de 60 à 80% en poids du latex et 10 à 50%, de préférence de 20 à 40% en poids de l'émulsion de cire paraffinique.

8. Utilisation selon l'une des revendications 1 et 3 à 7 ou procédé selon l'une des revendications 2 à 7, pour laquelle la composition comprend en outre des additifs antigel, des colorants (cela permettant notamment à l'utilisateur de visualiser les parties de la surface qui ont déjà été traitées), des biocides, des agents de coalescence, des modificateurs de viscosité, etc.

9. Utilisation selon l'une quelconque des revendications 1 et 3 à 8 ou procédé selon l'une des revendications 2 à 8, pour laquelle la composition est constituée d'au moins une émulsion de cire paraffinique et d'au moins un latex formé d'une émulsion aqueuse colloïdale d'au moins un polymère et/ou copolymère et éventuellement d'additifs.

10. Utilisation selon la revendication 9 ou procédé selon la revendication 9, pour laquelle les additifs sont choisis parmi des additifs antigel, des colorants, des biocides, des agents de coalescence et/ou des modificateurs de viscosité.

11. Utilisation selon l'une des revendications 1 et 3 à 10, pour obtenir :

    - un coefficient de protection vis-à-vis de la cure supérieur ou égal à 70%, de préférence supérieur ou égal à 80%, de préférence supérieur ou égale à 90% à 6h ; et/ou
    - un coefficient de protection vis-à-vis de la cure supérieur ou égal à 45%, de préférence supérieur ou égal à 60% à 24h ; et/ou

- une adhérence supérieure ou égale à 0,6 MPa, de préférence supérieure ou égale à 0,7 MPa.

**Patentansprüche**

1. Verwendung einer Zusammensetzung, die mindestens eine Paraffinwachsemulsion und mindestens einen Latex umfasst, der aus einer kolloidalen wässrigen Emulsion mindestens eines Polymers und/oder Copolymers gebildet ist, wobei die Zusammensetzung frei von Paraffinöl und frei von Füllstoffen ist, wobei die Zusammensetzung auf eine frische hydraulische Zusammensetzung aufgesprüht wird, um das Härten der frisch eingebrachten oder frisch entformte hydraulischen Zusammensetzung sicherzustellen und um damit gemeinsam der Oberfläche der gehärteten hydraulischen Zusammensetzung Hafteigenschaften zu verleihen.

2. Verfahren, das das Härten einer frisch eingebrachten oder frisch entformten hydraulischen Zusammensetzung sicherstellt und damit gemeinsamen der Oberfläche der gehärteten hydraulischen Zusammensetzung Hafteigenschaften verleiht, umfassend das Aufsprühen einer Zusammensetzung auf die frische hydraulische Zusammensetzung, die mindestens eine Paraffinwachsemulsion und mindestens einen Latex umfasst, der aus einer kolloidalen wässrigen Emulsion mindestens eines Polymers und/oder Copolymers gebildet wird, wobei die Zusammensetzung frei von Paraffinöl und frei von Füllstoffen ist.

3. Verwendung nach Anspruch 1 oder Verfahren nach Anspruch 2, bei der oder dem das Paraffinwachs ein Paraffin erdölischen oder synthetischen Ursprungs umfasst, das als Gemisch lineare oder verzweigte, gesättigte und/oder ungesättigte aliphatische Kohlenwasserstoffe (Alkane und/oder Alkene) der allgemeinen Formeln $C_nH_{2n+2}$ und $C_nH_{2n}$ enthält, für die n eine ganze Zahl größer oder gleich 15, vorzugsweise größer oder gleich 20, vorzugsweise zwischen 20 und 120 ist, und deren Schmelzpunkt zwischen 40 und 75 °C, vorzugsweise zwischen 50 und 70 °C liegt.

4. Verwendung nach Anspruch 1 oder 3 oder Verfahren nach Anspruch 2 oder 3, **dadurch gekennzeichnet, dass** der Latex aus einer wässrigen kolloidalen Emulsion mindestens eines Polymers und/oder Copolymers besteht, ausgewählt aus der Gruppe bestehend aus Homopolymeren der (Meth)acrylsäure und Estern dieser Säuren mit einer C1- bis C12 Estergruppe, wie Methyl, Ethyl, Propyl, Butyl, Pentyl, Hexyl, Octyl, 2-Ethyl-Hexyl, 2-Ethyl-Butyl, 2-Heptyl-Hexyl, aus Copolymeren der (Meth)acrylsäure und/oder Estern dieser Säuren mit einer C1-12 Estergruppe, Copolymeren von Vinyl und (Meth)acrylsäure, Copolymeren von Vinyl und C1-12 Estern, Copolymeren von (Meth)acrylsäure, Copolymeren von (Meth)acrylsäure und (Meth)acrylsäureestern, Copolymeren von Styrol und (Meth)acrylsäure, Copolymeren von Ethylen und Vinylacetat, Copolymeren von Ethylen und (Meth)acrylsäure, Acryl/Urethan-Copolymeren und Styrol-Butadien-Copolymeren.

5. Verwendung nach einem beliebigen der Ansprüche 1 oder 3 oder Verfahren nach Anspruch 2 oder 3, wobei der Latex aus einer wässrigen kolloidalen Emulsion eines Styrol-Butadien-Copolymers besteht.

6. Verwendung nach einem der Ansprüche 1 und 3 bis 5 oder Verfahren nach einem der Ansprüche 2 bis 5, wobei der Latex 10 bis 80 Gew.-% Polymer oder Copolymer enthält.

7. Verwendung nach einem der Ansprüche 1 und 3 bis 6 oder Verfahren nach einem der Ansprüche 2 bis 6, wobei die Zusammensetzung 50 bis 90 Gew.-%, vorzugsweise 60 bis 80 Gew.-%, des Latex und 10 bis 50 Gew.-%, vorzugsweise 20 bis 40 Gew.-%, der Paraffinwachsemulsion enthält.

8. Verwendung nach einem der Ansprüche 1 und 3 bis 7 oder Verfahren nach einem der Ansprüche 2 bis 7, wobei die Zusammensetzung außerdem Frostschutzadditive, Farbstoffe (dies ermöglicht der Anwenderperson insbesondere, die bereits behandelten Teile der Oberfläche sichtbar zu machen), Biozide, Koaleszenzmittel, Viskositätsmodifikatoren usw. enthält.

9. Verwendung nach einem beliebigen der Ansprüche 1 und 3 bis 8 oder Verfahren nach einem der Ansprüche 2 bis 8, wobei die Zusammensetzung aus mindestens einer Paraffinwachsemulsion und mindestens einem Latex besteht, der aus einer kolloidalen wässrigen Emulsion mindestens eines Polymers und/oder Copolymers und gegebenenfalls Additiven gebildet ist.

10. Verwendung nach Anspruch 9 oder Verfahren nach Anspruch 9, wobei die Additive ausgewählt sind aus Frostschutzadditiven, Farbstoffen, Bioziden, Koaleszenzmitteln und/oder Viskositätsmodifikatoren.

**11.** Verwendung nach einem der Ansprüche 1 und 3 bis 10, zur Gewinnung von:

- einem Schutzkoeffizienten gegen Aushärtung größer oder gleich 70 %, vorzugsweise größer oder gleich 80 %, vorzugsweise größer oder gleich 90 % bei 6 h; und/oder
- einem Schutzkoeffizienten gegen Aushärtung größer als oder gleich 45 %, vorzugsweise größer als oder gleich 60 % bei 24 Stunden; und/oder
- einer Haftung von 0,6 MPa oder mehr, vorzugsweise 0,7 MPa oder mehr.

**Claims**

**1.** Use of a composition comprising at least one paraffin wax emulsion and at least one latex formed of a colloidal aqueous emulsion of at least one polymer and/or copolymer, the composition being free of paraffin oil and free of fillers, the composition being sprayed onto a fresh hydraulic composition in order to effect curing of said freshly installed or freshly demoulded hydraulic composition and at the same time to provide the surface of said hardened hydraulic composition with adhesive properties.

**2.** Method for effecting curing of a freshly installed or freshly demoulded hydraulic composition and at the same time for providing the surface of said hardened hydraulic composition with adhesive properties, which method comprises spraying onto the fresh hydraulic composition a composition comprising at least one paraffin wax emulsion and at least one latex formed of a colloidal aqueous emulsion of at least one polymer and/or copolymer, the composition being free of paraffin oil and free of fillers.

**3.** Use according to claim 1 or method according to claim 2, wherein the paraffin wax comprises a paraffin of petroleum origin or a synthetic paraffin containing, in admixture, linear or branched, saturated and/or unsaturated aliphatic hydrocarbons (alkanes and/or alkenes) of the general formulae $C_nH_{2n+2}$ and $C_nH_{2n}$, wherein n is an integer greater than or equal to 15, preferably greater than or equal to 20, preferably between 20 and 120, and the melting point of which is between 40 and 75°C, preferably between 50 and 70°C.

**4.** Use according to claim 1 or 3 or method according to claim 2 or 3, wherein the latex is composed of a colloidal aqueous emulsion of at least one polymer and/or copolymer chosen from the group composed of homopolymers of (meth)acrylic acid and esters of those acids in which the ester group is C1 to C12, such as methyl, ethyl, propyl, butyl, pentyl, hexyl, octyl, 2-ethylhexyl, 2-ethylbutyl, 2-heptylhexyl, of copolymers of (meth)acrylic acid and/or esters of those acids in which the ester group is C1 to C12, copolymers of vinyl and (meth)acrylic acid, copolymers of vinyl and C1 to C12 esters, copolymers of (meth)acrylic acid, copolymers of (meth)acrylic acid and (meth)acrylic esters, styrene-(meth)acrylic copolymers, copolymers of ethylene and vinyl acetate, copolymers of ethylene and (meth)acrylic acid, acrylic/urethane copolymers, styrene-butadiene copolymers.

**5.** Use according to either claim 1 or claim 3 or method according to claim 2 or 3, wherein the latex is composed of a colloidal aqueous emulsion of a styrene-butadiene copolymer.

**6.** Use according to any one of claims 1 and 3 to 5 or method according to any one of claims 2 to 5, wherein the latex comprises from 10 to 80% by weight of the polymer or copolymer.

**7.** Use according to any one of claims 1 and 3 to 6 or method according to any one of claims 2 to 6, wherein the composition comprises from 50 to 90%, preferably from 60 to 80% by weight of the latex and from 10 to 50%, preferably from 20 to 40% by weight of the paraffin wax emulsion.

**8.** Use according to any one of claims 1 and 3 to 7 or method according to any one of claims 2 to 7, wherein the composition further comprises anti-gel additives, colouring agents (which especially allow the user to see the parts of the surface that have already been treated), biocides, coalescing agents, viscosity modifiers, etc.

**9.** Use according to any one of claims 1 and 3 to 8 or method according to any one of claims 2 to 8, wherein the composition is composed of at least one paraffin wax emulsion and at least one latex formed of a colloidal aqueous emulsion of at least one polymer and/or copolymer and optionally additives.

**10.** Use according to claim 9 or method according to claim 9, wherein the additives are chosen from anti-gel additives, colouring agents, biocides, coalescing agents and/or viscosity modifiers.

**11.** Use according to any one of claims 1 and 3 to 10 for obtaining:

- a coefficient of protection with respect to curing greater than or equal to 70%, preferably greater than or equal to 80%, preferably greater than or equal to 90% at 6 h; and/or
- a coefficient of protection with respect to curing greater than or equal to 45%, preferably greater than or equal to 60% at 24 h; and/or
- an adhesion greater than or equal to 0.6 MPa, preferably greater than or equal to 0.7 MPa.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2691962
- US 4495319 A
- US 2928752 A
- WO 03101910 A